# EUROPEAN PATENT SPECIFICATION

(11) **EP 4 351 051 B1**
(45) Date of publication and mention of the grant of the patent: **05.08.2026**
(21) Application number: 22827598.8
(22) Date of filing: 22.06.2022
(51) Int. Cl.: H04L 69/24, H04L 69/22, H04L 1/00

(54) **COMMUNICATION METHOD AND RELATED DEVICE**
KOMMUNIKATIONSVERFAHREN UND ZUGEHÖRIGE VORRICHTUNG
PROCÉDÉ DE COMMUNICATION ET DISPOSITIF ASSOCIÉ

(30) Priority: 25.06.2021 CN 202110713668
(43) Date of publication of application: 10.04.2024
(73) Proprietor: Huawei Technologies Co., Ltd., Longgang Shenzhen, Guangdong 518129 (CN)
(72) Inventor: JIANG, Youjun, Shenzhen, Guangdong 518129 (CN); ZHENG, Hewen, Shenzhen, Guangdong 518129 (CN); LI, Jianzhao, Shenzhen, Guangdong 518129 (CN); HAN, Lei, Shenzhen, Guangdong 518129 (CN); XU, Xiaofei, Shenzhen, Guangdong 518129 (CN)
(74) Representative: Grünecker Patent- und Rechtsanwälte PartG mbB
(86) International application number: PCT/CN2022/100356
(87) International publication number: WO 2022/268105

(56) References cited:
- CN-A- 110 011 787
- CN-A- 112 565 105
- CN-A- 112 887 277
- US-A1- 2010 111 085
- US-A1- 2015 382 238
- US-A1- 2019 044 657
- "IEEE Standard for Information TechnologyTelecommunications and Information Exchange Between SystemsLocal and Metropolitan Area NetworksSpecific Requirements Part 3: Carrier Sense Multiple Access With Collision Detection (CSMA/CD) Access Method and Physical Layer Specifications Amendment: Media Acces", IEEE STANDARD; [IEEE STANDARD], IEEE, PISCATAWAY, NJ, USA, 7 September 2004 (2004-09-07), pages _1 - 623, XP017603694, ISBN: 978-0-7381-4076-6

## Description

### TECHNICAL FIELD

Embodiments of this application relate to the communication field, and in particular, to a communication method and a related device.

### BACKGROUND

As a data scale increases sharply, a requirement of application performance for computing power of processing system increases exponentially, and an application requirement for high-performance computing (high-performance computing, HPC) increases sharply. The HPC is mainly used in scientific research institutes such as schools, research institutes, and the like, and used in fields such as petroleum departments, medical biology, computational chemistry, automotive and aerospace design, architectural structure design, three-dimensional graphics computing, and the like. The HPC is a computing system and environment that uses a plurality of processors (which are a part of a single machine) or several computers (which are operated as a single computing resource) in a cluster. For a large-scale computing task, a parallel algorithm is used, and a large task is split and distributed to different nodes in a cluster for parallel computing. Then, computing results are summarized to quickly obtain a final result. Therefore, HPC system performance is closely related to computing power of a computing node, storage performance, and node interconnection network performance.

CN 112 887 277 A discloses a method of communicating data in Ethernet frames wherein the need of padding of small data to be transmitted is avoided by using preset frame lengths for data transmission that are appropriately determined based on minimum frame lengths available by a transmitting and receiving device, respectively. US 2010/0111085 A1 discloses employment of a Medium Access Control (MAC) frame including an embedded Internet Protocol (IP) frame and a MAC address. The IP frame includes content of a second multimedia program and a second multicast address of the second multimedia program, the MAC address having been resolved from the second multicast address. The second multicast address is determined to be linked to a first multicast address of a first multimedia program of a television channel being played at a user host. The IP frame is forwarded from the MAC frame to an IP layer where the second multicast address is ascertained to be a multicast sub group address of the first multimedia program and is replaced in the IP frame with the first multicast address, after which the IP frame is transmitted to the user host to replace or be inserted into the first multimedia program being played.

Currently, interconnection manners mostly used in HPC include InfiniBand (InfiniBand, IB), remote direct memory access over converged Ethernet (remote direct memory access over converged Ethernet, RoCE), a proprietary protocol (for example, CRAY-CRAY), and the like. A minimum packet size of the RoCE is 64 B.

However, a conventional standard Ethernet is limited by a minimum packet length of 64 B because a historical 10 M/100 M fast Ethernet is limited by half-duplex collision detection time. A small message packet needs to be padded (padded) with a large amount of redundant data to 64 B. Consequently, a proportion of a quantity of valid message bytes to the entire packet is low. In other words, encapsulation efficiency of the small message packet is low.

### SUMMARY

The scope of the invention is defined by a communication method according to independent claim 1, a related device according to independent claim 12, a computer-readable storage medium according to independent claim 13, and a computer program product according to independent claim 14. A MAC frame length used for communication may be determined through reconciliation, so that encapsulation efficiency of a message packet is improved.

The word "invention" as used in the present description refers to the inventive concept as understood by the applicant at the time of filing the patent application. The matter for which protection is sought is defined in the appended claims. All following occurrences of the word "embodiment(s)", if referring to feature combinations different from those defined by the independent claims, refer to examples which were originally disclosed but which do not represent embodiments of the presently claimed invention; these examples are still shown for illustrative purposes only.

According to a first aspect, an embodiment of this application provides a communication method, and the communication method may be applied to a scenario such as switch networking (for example, HPC), an industrial Ethernet, or the like. The method may be performed by a communication device (for example, a first device), or may be performed by a component (for example, a processor, a chip, or a chip system) of a communication device. The method includes: receiving first information sent by a second device, where the first information indicates a second MAC frame length supported by the second device; determining a third MAC frame length based on a first media access control MAC frame length and the second MAC frame length, where the first MAC frame length is a MAC frame length supported by the first device, and the first MAC frame length is the same as or different from the second MAC frame length; and communicating with the second device based on the third MAC frame length.

In this embodiment of this application, the first device and the second device may determine, through reconciliation, a MAC frame length used for communication. Compared with the conventional technology in which a default MAC frame length is used, this application in which the MAC frame length is determined through reconciliation is more conducive to improving encapsulation efficiency of a message packet.

Optionally, in a possible implementation of the first aspect, the first MAC frame length, the second MAC frame length, and the third MAC frame length each are a minimum MAC frame length, and the minimum MAC frame length is a minimum length for transmitting a MAC frame. According to the invention, the first MAC frame length, the second MAC frame length, and the third MAC frame length each are a maximum MAC frame length, and the maximum MAC frame length is a maximum length for transmitting a MAC frame.

In this possible implementation, the first device and the second device may reconcile the maximum MAC frame length and the minimum MAC frame length, so that encapsulation efficiency of a small packet is improved. For the minimum MAC frame length, overheads (overheads) are reduced. For the maximum MAC frame length, valid payloads (payloads) are increased. In other words, in a case of a minimum MAC frame, useless redundancy is reduced, and in a case of a maximum MAC frame, useful payloads are increased, so that encapsulation efficiency is improved.

Optionally, in a possible implementation of the first aspect, the step of determining a third MAC frame length based on a first MAC frame length and the second MAC frame length includes: determining that the first MAC length is the third MAC frame length, and the first MAC frame length is greater than or equal to the second MAC frame length.

In this possible implementation, it may be determined that a relatively large MAC frame length in devices in reconciliation at two ends is a minimum MAC frame length supported by the devices at the two ends. In this way, redundant data is reduced to a maximum extent, and a requirement for transmitting a MAC packet at the two ends is satisfied.

Optionally, in a possible implementation of the first aspect, the step of determining a third MAC frame length based on a first MAC frame length and the second MAC frame length includes: determining that the third MAC frame length is greater than or equal to the first MAC frame length and the second MAC frame length, and the third MAC frame length is less than 64 bytes.

In this possible implementation, a shared third MAC frame length may be set to be greater than MAC frame lengths of the devices at the two ends and less than 64 bytes. Compared with the conventional technology in which a fixed minimum MAC frame length is 64 bytes, flexibility of communication between the devices at the two ends can be improved.

Optionally, in a possible implementation of the first aspect, the step further includes: sending second information to the second device. The second information indicates the first MAC frame length supported by the first device, and the second information is used by the second device to determine the third MAC frame length.

In this possible implementation, the first device may send the second information to the second device, so that the second device can determine the third MAC frame length based on the second information and the second MAC frame length. Therefore, minimum MAC frame lengths determined by the two ends are consistent. This helps the two ends communicate to each other by using the third MAC frame length.

Optionally, in a possible implementation of the first aspect, the step further includes: obtaining first data. The communicating with the second device based on the third MAC frame length includes: if the first data satisfies a first condition, performing non-padding encapsulation on the first data to obtain a first data frame, and sending the first data frame to the second device. A length of the first data frame is greater than or equal to the third MAC frame length. The third MAC frame length is less than 64 bytes. The first condition includes: A length of the first data is greater than or equal to a value obtained by subtracting an encapsulation length of the first data frame from the third MAC frame length. For example, the third MAC frame length is 50 bytes. For a standard Ethernet, an Ethernet packet header is 18. In this case, the first condition may be specifically that the length of the first data is greater than or equal to 32 bytes (that is, 50-18). For a case in which a VLAN packet header is 22, the first condition may be specifically that the length of the first data is greater than or equal to 28 bytes (that is, 50-22). Certainly, there may alternatively be a customized packet header in another form. This is not specifically limited herein. The encapsulation length may be a packet header length added during encapsulation.

In this possible implementation, in a sending procedure, whether to perform padding (padding) encapsulation may be determined based on a third MAC frame length reconciled by the devices at the two ends (or the value obtained by subtracting an encapsulation length from the third MAC frame length). Compared with a 64-byte basis in the conventional technology, redundant padding of a packet may be reduced.

Optionally, in a possible implementation of the first aspect, the step of communicating with the second device based on the third MAC frame length includes: if the first data satisfies a second condition, performing padding encapsulation on the first data to obtain a second data frame, and sending the second data frame to the second device. A length of the second data frame is greater than or equal to the third MAC frame length. The third MAC frame length is less than 64 bytes. The second condition includes: The length of the first data is less than a value obtained by subtracting an encapsulation length of the second data frame from the third MAC frame length.

In this possible implementation, in the sending procedure, whether to perform padding (padding) encapsulation may be determined based on the third MAC frame length reconciled by the devices at the two ends (or the value obtained by subtracting an encapsulation length from the third MAC frame length). Compared with the 64-byte basis in the conventional technology, redundant padding of the packet may be reduced.

Optionally, in a possible implementation of the first aspect, the step further includes: receiving a third data frame; and if a length of the third data frame is less than the third MAC frame length, discarding the third data frame. The third MAC frame length is less than 64 bytes.

In this possible implementation, in a receiving procedure, whether to perform discarding is determined based on the third MAC frame length. This reduces receiving of a non-MAC frame.

Optionally, in a possible implementation of the first aspect, the step further includes: if the length of the third data frame is greater than 64 bytes, or the length of the third data frame is less than 64 bytes and greater than or equal to the third MAC frame length, receiving the third data frame.

In this possible implementation, in the receiving procedure, whether to perform receiving is determined based on the third MAC frame length. Compared with the 64-byte basis in the conventional technology, this facilitates normal receiving of a MAC frame between devices having a configurable minimum MAC frame length.

Optionally, in a possible implementation of the first aspect, the first information is link layer discovery protocol LLDP information and/or physical coding sublayer PCS information.

In this possible implementation, communication and determining of a minimum MAC frame of the first device and the second device may be implemented by using the LLDP or PCS, to further implement subsequent communication based on the reconciled third MAC frame length. This reduces redundancy padding of the small packet.

Optionally, in a possible implementation of the first aspect, the first information is carried in a type-length-value TLV field in the LLDP information, a preamble, or a code block in the PCS information.

In this possible implementation, communication and determining of the minimum MAC frame between the first device and the second device may be implemented by using the TLV field in the LLDP, the code block in the PCS, or the preamble, to further implement subsequent communication based on the reconciled third MAC frame length. This reduces redundancy padding of the small packet.

Optionally, in a possible implementation of the first aspect, the step further includes: sending third information to a third device based on the third MAC frame length. The third information is used by the third device to determine a MAC frame length used for communication with the first device.

In this possible implementation, the first device may reconcile the MAC frame length with the second device, and the first device may further reconcile the MAC frame length with the third device based on the MAC frame length reconciled by the first device and the second device, to obtain a MAC frame length that meets communication among the first device, the second device, and the third device.

According to a second aspect, an embodiment of this application provides a communication method, and the communication method may be applied to a scenario such as switch networking (for example, HPC), an industrial Ethernet, or the like. The method may be performed by a communication device (for example, a first device), or may be performed by a component (for example, a processor, a chip, or a chip system) of a communication device. The method includes: The first device obtains first data. If the first data satisfies a first condition, the first device performs non-padding encapsulation on the first data to obtain a first data frame, and sends the first data frame to a second device. The first condition includes: A length of the first data is greater than or equal to a value obtained by subtracting an encapsulation length of the first data frame from a minimum MAC frame length. The minimum MAC frame length is less than 64 bytes.

In this embodiment, in a sending procedure, whether to perform padding (padding) encapsulation may be determined based on a minimum MAC frame length supported by the communication device (or a value obtained by subtracting the encapsulation length from the minimum MAC frame length). Compared with a 64-byte basis in the conventional technology, redundant padding of a packet may be reduced.

Optionally, in a possible implementation of the second aspect, the step further includes: if the first data satisfies a second condition, the first device performs padding encapsulation on the first data to obtain a second data frame, and sends the second data frame to the second device. The second condition includes: The length of the first data is less than a value obtained by subtracting an encapsulation length of the second data frame from the minimum MAC frame length. The minimum MAC frame length is less than 64 bytes.

In this possible implementation, whether to perform padding (padding) encapsulation may be determined based on the minimum MAC frame length supported by the communication device (or a value obtained by subtracting an encapsulation length from the minimum MAC frame length). Compared with the 64-byte basis in the conventional technology, redundant padding of the packet may be reduced.

According to a third aspect, an embodiment of this application provides a communication method, and the communication method may be applied to a scenario such as switch networking (for example, HPC), an industrial Ethernet, or the like. The method may be performed by a communication device (for example, a first device), or may be performed by a component (for example, a processor, a chip, or a chip system) of a communication device. The method includes: The first device determines a first data frame. If a length of the first data frame is less than a minimum MAC frame length supported by the first device, the first device discards the first data frame. The minimum MAC frame length is less than 64 bytes.

In this embodiment, in a receiving procedure, whether to perform discarding may be determined based on a third MAC frame length. This reduces receiving of a non-MAC frame.

Optionally, in a possible implementation of the third aspect, the step further includes: If the length of the first data frame is greater than 64 bytes, or the length of the first data frame is less than 64 bytes and greater than or equal to the minimum MAC frame length, the first device receives the first data frame.

In this possible implementation, in the receiving procedure, whether to perform receiving is determined based on the third MAC frame length. Compared with a 64-byte basis in the conventional technology, this facilitates normal receiving of a MAC frame between devices having a configurable minimum MAC frame length.

According to a fourth aspect, an embodiment of this application provides a communication device, and the communication device may be used in a scenario such as switch networking (for example, HPC), an industrial Ethernet, or the like. The communication device may be a network device or a terminal device. A minimum media access control MAC frame length supported by the device is less than 64 bytes, and the minimum MAC frame length is a minimum length for transmitting a MAC frame.

In this embodiment, a first device may support the minimum MAC frame length less than 64 bytes. This helps reduce redundant padding of a small packet in a communication process, and improve encapsulation efficiency of the small packet.

According to a fifth aspect, an embodiment of this application provides a first device, and the first device may be used in a scenario such as switch networking (for example, HPC), an industrial Ethernet, or the like. The first device may be a network device or a terminal device. The first device includes: a receiving unit, configured to receive first information sent by a second device, where the first information indicates a second MAC frame length supported by the second device; a determining unit, configured to determine a third MAC frame length based on a first media access control MAC frame length and the second MAC frame length, where the first MAC frame length is a MAC frame length supported by the first device, and the first MAC frame length is the same as or different from the second MAC frame length; and a communication unit, configured to communicate with the second device based on the third MAC frame length.

Optionally, in a possible implementation of the fifth aspect, the first MAC frame length, the second MAC frame length, and the third MAC frame length each are a minimum MAC frame length, and the minimum MAC frame length is a minimum length for transmitting a MAC frame; or the first MAC frame length, the second MAC frame length, and the third MAC frame length each are a maximum MAC frame length, and the maximum MAC frame length is a maximum length for transmitting a MAC frame.

Optionally, in a possible implementation of the fifth aspect, the determining unit is specifically configured to determine that the first MAC length is the third MAC frame length, and the first MAC frame length is greater than or equal to the second MAC frame length.

Optionally, in a possible implementation of the fifth aspect, the determining unit is specifically configured to determine that the third MAC frame length is greater than or equal to the first MAC frame length and the second MAC frame length, and the third MAC frame length is less than 64 bytes.

Optionally, in a possible implementation of the fifth aspect, the communication unit is further configured to send second information to the second device. The second information indicates the first MAC frame length supported by the first device, and the second information is used by the second device to determine the third MAC frame length.

Optionally, in a possible implementation of the fifth aspect, the receiving unit is further configured to obtain first data; and the communication unit is specifically configured to: if the first data satisfies a first condition, perform non-padding encapsulation on the first data to obtain a first data frame, and send the first data frame to the second device. A length of the first data frame is greater than or equal to the third MAC frame length. The third MAC frame length is less than 64 bytes. The first condition includes: A length of the first data is greater than or equal to a value obtained by subtracting an encapsulation length of the first data frame from the third MAC frame length.

Optionally, in a possible implementation of the fifth aspect, the communication unit is specifically configured to: if the first data satisfies a second condition, perform padding encapsulation on the first data to obtain a second data frame, and send the second data frame to the second device. A length of the second data frame is greater than or equal to the third MAC frame length. The third MAC frame length is less than 64 bytes. The second condition includes: The length of the first data is less than a value obtained by subtracting an encapsulation length of the second data frame from the third MAC frame length.

Optionally, in a possible implementation of the fifth aspect, the receiving unit is further configured to receive a third data frame; and the receiving unit is further configured to: if a length of the third data frame is less than the third MAC frame length, discard the third data frame. The third MAC frame length is less than 64 bytes.

Optionally, in a possible implementation of the fifth aspect, the receiving unit is further configured to: if the length of the third data frame is greater than 64 bytes, or the length of the third data frame is less than 64 bytes and greater than or equal to the third MAC frame length, receive the third data frame.

Optionally, in a possible implementation of the fifth aspect, the first information is link layer discovery protocol LLDP information and/or physical coding sublayer PCS information.

Optionally, in a possible implementation of the fifth aspect, the first information is carried in a type-length-value TLV field in the LLDP information, a preamble, or a code block in the PCS information.

Optionally, in a possible implementation of the fifth aspect, the communication unit is further configured to send third information to a third device based on the third MAC frame length. The third information is used by the third device to determine a MAC frame length used for communication with the first device.

According to a sixth aspect, an embodiment of this application provides a first device, and the first device may be used in a scenario such as switch networking (for example, HPC), an industrial Ethernet, or the like. The first device may be a network device or a terminal device. The first device includes: an obtaining unit, configured to obtain first data; and a communication unit, configured to: if the first data satisfies a first condition, perform non-padding encapsulation on the first data to obtain a first data frame, and send the first data frame to a second device. The first condition includes: A length of the first data is greater than or equal to a value obtained by subtracting an encapsulation length of the first data frame from a minimum MAC frame length. The minimum MAC frame length is less than 64 bytes.

Optionally, in a possible implementation of the sixth aspect, the communication unit is further configured to: if the first data satisfies a second condition, perform, by the first device, padding encapsulation on the first data to obtain a second data frame, and send the second data frame to the second device. The second condition includes: The length of the first data is less than a value obtained by subtracting an encapsulation length of the first data frame from the minimum MAC frame length.

According to a seventh aspect, an embodiment of this application provides a first device, and the first device may be used in a scenario such as switch networking (for example, HPC), an industrial Ethernet, or the like. The first device may be a network device or a terminal device. The first device includes: a determining unit, configured to determine a first data frame; and a communication unit, configured to: if a length of the first data frame is less than a minimum MAC frame length supported by the first device, discard the first data frame. The minimum MAC frame length is less than 64 bytes.

Optionally, in a possible implementation of the seventh aspect, the communication unit is configured to: if the length of the first data frame is greater than 64 bytes, or the length of the first data frame is less than 64 bytes and greater than or equal to the minimum MAC frame length, receive the first data frame.

According to an eighth aspect, this application provides a communication device, including a processor. The processor is coupled to a memory, and the memory is configured to store a program or instructions. When the program or the instructions are executed by the processor, the communication device is enabled to implement the method according to any one of the first aspect or the possible implementations of the first aspect, the communication device is enabled to implement the method according to any one of the second aspect or the possible implementation of the second aspect, or the communication device is enabled to implement the method according to any one of the third aspect or the possible implementation of the third aspect.

According to a ninth aspect, this application provides a computer-readable medium. The computer-readable medium stores a computer program or instructions. When the computer program or the instructions are run on a computer, the computer is enabled to perform the method according to any one of the first aspect or the possible implementations of the first aspect, the computer is enabled to perform the method according to any one of the second aspect or the possible implementation of the second aspect, or the computer is enabled to perform the method according to any one of the third aspect or the possible implementation of the third aspect.

According to a tenth aspect, this application provides a computer program product. When the computer program product is executed on a computer, the computer is enabled to perform the method according to any one of the first aspect or the possible implementations of the first aspect, the computer is enabled to perform the method according to any one of the second aspect or the possible implementation of the second aspect, or the computer is enabled to perform the method according to any one of the third aspect or the possible implementation of the third aspect.

For technical effects brought by any one of the fifth aspect, the eighth aspect, the ninth aspect, the tenth aspect, or the possible implementations thereof, refer to the technical effects brought by the first aspect or the different possible implementations of the first aspect. Details are not described herein again.

For technical effects brought by any one of the sixth aspect, the eighth aspect, the ninth aspect, the tenth aspect, or the possible implementations thereof, refer to the technical effects brought by the second aspect or the different possible implementations of the second aspect. Details are not described herein again.

For technical effects brought by the seventh aspect, the eighth aspect, the ninth aspect, the tenth aspect, or the possible implementations thereof, refer to the technical effects brought by the first aspect or the different possible implementations of the first aspect. Details are not described herein again.

It can be learned from the foregoing technical solutions that embodiments of this application have the following advantages: The first device determines, based on MAC frame lengths supported by the first device and the second device, the MAC frame length used for communication with the second device. In other words, the first device and the second device may determine, through reconciliation, the MAC frame length used for communication. Compared with the conventional technology in which the default MAC frame length is used, this application in which the MAC frame length is determined through reconciliation is more conducive to improving the encapsulation efficiency of the message packet.

### BRIEF DESCRIPTION OF DRAWINGS

FIG. 1 is a schematic diagram of a communication system according to an embodiment of the present invention;
FIG. 2 is a schematic flowchart of a communication method according to an embodiment of this application;
FIG. 3 to FIG. 5 are schematic diagrams of a plurality of cases of first information according to an embodiment of this application;
FIG. 6 is another schematic flowchart of a communication method according to an embodiment of this application;
FIG. 7 is still another schematic flowchart of a communication method according to an embodiment of this application; and
FIG. 8 to FIG. 11 are several schematic structural diagrams of a communication device according to this application.

### DESCRIPTION OF EMBODIMENTS

Embodiments of this application provide a communication method and a related device. A MAC frame length used for communication may be determined through reconciliation, so that encapsulation efficiency of a message packet is improved.

Some terms in embodiments of this application are first explained and described, to help a person skilled in the art have a better understanding.

### 1. High-performance computing (high-performance computing, HPC)

The HPC is mainly used in scientific research institutes such as schools, research institutes, and the like, and used in fields such as petroleum departments, medical biology, computational chemistry, automotive and aerospace design, architectural structure design, three-dimensional graphics computing, and the like. The HPC is a computing system and environment that uses a plurality of processors (which are a part of a single machine) or several computers (which are operated as a single computing resource) in a cluster. For a large-scale computing task, a parallel algorithm is used, and a large task is split and distributed to different nodes in a cluster for parallel computing. Then, computing results are summarized to quickly obtain a final result. Therefore, HPC system performance is closely related to computing power of a computing node, storage performance, and node interconnection network performance. From a perspective of a message passing interface (message passing interface, MPI) invoked by the HPC, a large part is collective communication, and the most part is a small message (which is less than 16 B) of an Allreduce type.

### 2. Packet encapsulation efficiency

Packet encapsulation efficiency is a ratio (%) of a quantity of valid payload bytes (Bytes, B) carried in a packet to a total quantity of bytes in the packet. Different valid payloads correspond to different encapsulation efficiency. In most HPC applications, a valid payload is less than 16 B. In this case, packet encapsulation efficiency is closely related to packet overheads (overheads).

The following clearly and completely describes the technical solutions in embodiments of this application with reference to the accompanying drawings in embodiments of this application. It is clear that the described embodiments are merely some but not all of embodiments of this application.

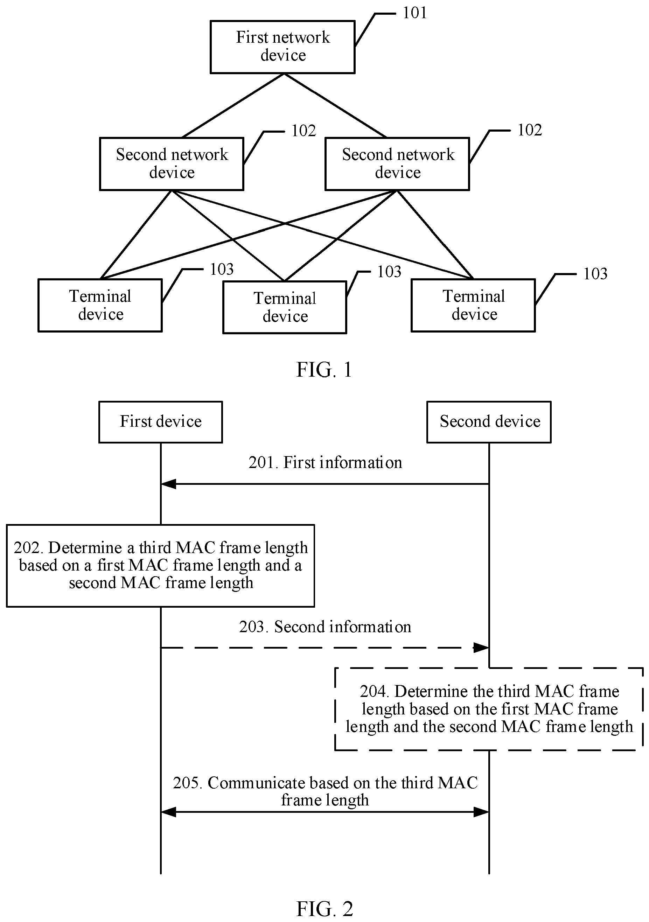

FIG. 1 is a schematic diagram of a communication system. The communication system may include a first network device 101, second network devices 102, and terminal devices 103. A terminal device 103 communicates with the first network device 101 via a second network device 102.

In this embodiment of this application, only one first network device 101, two second network devices 102, and three terminal devices 103 are used as an example for description. During actual application, the communication system in this embodiment of this application may include more or fewer first network devices, second network devices, and terminal devices. A quantity of first network devices, a quantity of second network devices, and a quantity of terminal devices are not limited in this embodiment of this application.

The first network device 101 and/or the second network device 102 in this embodiment of this application may be any switch or server that has a wireless/wired transceiver function. For example, the first network device 101 may alternatively be a spine (spine) switch, and the second network device 102 may alternatively be a leaf (leaf) switch.

The terminal device 103 in this embodiment of this application is a device having a wireless/wired transceiver function, and may be deployed on land, including an indoor device or an outdoor device, a handheld device, a wearable device, or a vehicle-mounted device; may be deployed on the water (for example, on a ship); or may be deployed in the air (for example, on an airplane, a balloon, or a satellite). The terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), an in-vehicle terminal device, a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in a smart city, a wireless terminal and a wearable terminal in a smart home (smart home), or the like. An application scenario is not limited in the embodiments of this application. The terminal device may also be sometimes referred to as a terminal, user equipment (user equipment, UE), an access terminal device, a vehicle-mounted terminal, an industrial control terminal, a UE unit, a UE station, a mobile station, a mobile console, a remote station, a remote terminal device, a mobile device, a UE agent, a UE apparatus, or the like. The terminal device may be fixed or mobile. In addition, the terminal device may alternatively be a chip system configured to implement a function of UE.

The foregoing communication system may be used in a scenario such as switch networking (for example, HPC), an industrial Ethernet, or the like. Currently, interconnection manners mostly used by the HPC include IB, RoCE, and a proprietary protocol (for example, CRAY), and the like. Packet overheads are 20 B to 54 B. For an HPC application, a small size message accounts for a high proportion.

However, due to a limitation of a standard Ethernet (to be specific, a conventional standard Ethernet is limited by a minimum packet length of 64 B because a historical 10 M/100 M fast Ethernet is limited by half-duplex collision detection time), MAC determines whether to perform padding (Padding) based on a fixed length of 64 B. If a length of a received packet is less than 64 B, the MAC directly discards the packet. If a length of a sent packet is less than 64 B, the MAC performs padding.

When small messages having a same quantity of bytes are sent, the IB/CRAY supports a relatively small minimum packet size, so that a small message packet does not need padding (padding), and a proportion of a quantity of valid information bytes to the entire packet is relatively high (where packet encapsulation efficiency is relatively high). However, in the Ethernet, a small message needs to be padded with a large amount of redundant data to 64 B due to a relatively large minimum packet size limitation (64 B) of the Ethernet. Consequently, a proportion of a quantity of valid message bytes to the entire packet is relatively low. In other words, encapsulation efficiency of the small message packet is relatively low.

To resolve the foregoing problem, this application provides a communication method and a related device. A first device and a second device may determine, through reconciliation, a MAC frame length used for communication. Compared with the conventional technology in which a default MAC frame length is used, this application in which the MAC frame length is determined through reconciliation is more conducive to improving encapsulation efficiency of a message packet.

The following describes the communication method in embodiments of this application with reference to the communication system shown in FIG. 1. Refer to FIG. 2. An embodiment of a communication method provided in embodiments of this application includes step 201 to step 206. A first device and a second device may be the first network device and the second network device in FIG. 1, or may be the second network device and the terminal device in FIG. 1. This is not specifically limited herein.

Step 201. The first device receives first information sent by the second device.

The first device receives the first information sent by the second device. The first information indicates a second MAC frame length supported by the second device.

In this embodiment of this application, an example in which a MAC frame length (a first MAC frame length, the second MAC frame length, a third MAC frame length, and the like) is a minimum MAC frame length is used for description. It may be understood that, during actual application, the MAC frame length may alternatively be a maximum MAC frame length or the like. This is not specifically limited herein. The minimum MAC frame length represents a minimum length for transmitting a MAC frame, and the maximum MAC frame length represents a maximum length for transmitting a MAC frame. For the minimum MAC frame length, overheads (overheads) are reduced. For the maximum MAC frame length, valid payloads (payloads) are increased. In other words, in a case of a minimum MAC frame, useless redundancy is reduced, and/or in a case of a maximum MAC frame, useful payloads are increased, so that encapsulation efficiency is improved.

There may be a plurality of cases for the first information or second information in this embodiment of this application. The following separately describes the plurality of cases by using the first device as an example.

In a first case, the first information is carried in the link layer discovery protocol (link layer discovery protocol, LLDP).

Optionally, the first information may be carried in a type-length-value (type length value, TLV) field in the LLDP.

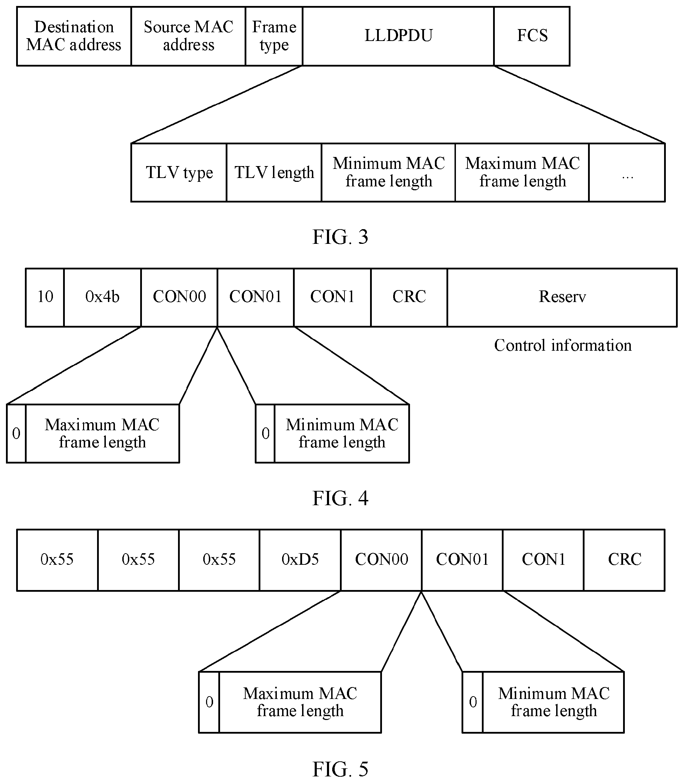

For example, the first information may be shown in FIG. 3. A source MAC address may be a port MAC address of the second device, or may be a device MAC address of the second device. A frame type may be 0X88CC. LLDPDU is data. A frame check sequence (Frame Check Sequence, FCS) may also be referred to as a frame trailer, in other words, a tail field of a protocol data unit (frame) at a data link layer of a computer network, and is a 4-byte cyclic redundancy check code. The LLDPDU may include a TLV type (for example, type=9), a TLV length, a minimum MAC frame length, a maximum MAC frame length, and the like. The minimum MAC frame length or the maximum MAC frame length is the second MAC frame length supported by the second device. After receiving the first information, the first device may determine the second MAC frame length from the TLV field in the first information.

In a second case, the first information is carried in physical coding sublayer (physical coding sublayer, PCS) information.

Optionally, the first information may be carried in a code block in the PCS information. Specifically, the first information may be carried in an O code (for example, Block-type=0x4b) in a PCS code block. After the first device receives the first information, a reconciliation sublayer (reconciliation sublayer, RS) of MAC of the first device obtains, by parsing a block of 0x4b, the second MAC frame length supported by the second device.

For example, the first information may be shown in FIG. 4. 0x4b is used for representing a block type, CON00 is used for representing a maximum MAC frame length supported by the second device, and C0N01 is used for representing a minimum MAC frame length supported by the second device. Further, C0N01 may use 1-bit 0 or 1 to represent whether the second device enables a configurable maximum MAC frame length, and C0N01 may use 1-bit 0 or 1 to represent whether the second device enables a configurable minimum MAC frame length. For example, 0 is used for representing disabled, and 1 is used for representing enabled; or 1 is used for representing disabled, and 0 is used for representing enabled.

In this embodiment of this application, if a device supports a configurable minimum MAC frame length, the function is enabled by default.

In a third case, the first information is carried in a preamble (preamble) of an Ethernet packet.

Optionally, the first information may be carried in the preamble of the Ethernet packet.

For example, the first information may be shown in FIG. 5. First several 0x55 represent preamble symbols, 0xD5 represents a start of frame delimiter (start of frame delimiter, SFD), and cyclic redundancy check (cyclic redundancy check, CRC) is used for detecting or checking an error that may occur after data transmission or storage. This uses a principle of division and remainder to detect an error. CON00 is used for representing a maximum MAC frame length supported by the second device, and C0N01 is used for representing a minimum MAC frame length supported by the second device. Further, C0N01 may use 1-bit 0 or 1 to represent whether the second device enables a configurable maximum MAC frame length, and C0N01 may use 1-bit 0 or 1 to represent whether the second device enables a configurable minimum MAC frame length. For example, 0 is used for representing disabled, and 1 is used for representing enabled; or 1 is used for representing disabled, and 0 is used for representing enabled.

Compared with an existing Ethernet packet in which a frame starts with a 7-byte preamble and a 1-byte start frame delimiter (where a corresponding hexadecimal representation thereof is 0x55, 0x55, 0x55, 0x55, 0x55, 0x55, 0x55, and 0xD5), the preamble in this embodiment of this application can transmit a MAC frame length supported by the device, and can ensure accurate transmission of the first information by adding the CRC.

It may be understood that the foregoing plurality of cases of the first information are merely examples. During actual application, the first information may alternatively be in another form. This is not specifically limited herein.

In addition, the first device and the second device may be devices that support a minimum MAC frame length of 64 bytes in a standard Ethernet, or may be devices that support a minimum MAC frame less than 64 bytes (or may be understood as devices that support a configurable minimum MAC frame length). This is not specifically limited herein.

Step 202. The first device determines the third MAC frame length based on the first MAC frame length and the second MAC frame length.

Optionally, before or after step 201, the first device may obtain the first MAC frame length supported by the first device.

After receiving the first information, the first device may determine, based on the first information, the second MAC frame length supported by the second device. Then, the third MAC frame length is determined based on the first MAC frame length and the second MAC frame length.

In addition, if the first device does not support the minimum MAC frame length less than 64 bytes, or the first device does not enable a function that the minimum MAC frame length is less than 64 bytes, in other words, the first MAC frame length supported by the first device may be 64 bytes. The foregoing descriptions are similar to those of second device, and details are not described herein again.

In this embodiment of this application, there may be a plurality of manners of determining the third MAC frame length based on the first MAC frame length and the second MAC frame length. The following separately describes the manners.

In a first manner, a maximum length in the first MAC frame length and the second MAC frame length is determined as the third MAC frame length.

Optionally, the maximum length in the first MAC frame length and the second MAC frame length is selected as the third MAC frame length.

For example, if the first MAC frame length is 56 bytes, and the second MAC frame length is 32 bytes, the relatively large first MAC frame length is determined as the third MAC frame length. In other words, the third MAC frame length is determined as 56 bytes.

For example, if the first MAC frame length is 64 bytes, and the second MAC frame length is 32 bytes, the relatively large first MAC frame length is determined as the third MAC frame length. In other words, the third MAC frame length is determined as 64 bytes.

In a second manner, the third MAC frame length is determined to be greater than the first MAC frame length and the second MAC frame length.

Optionally, a length that is greater than both the first MAC frame length and the second MAC frame length is selected as the third MAC frame length. In addition, in a case in which the third MAC frame length is the minimum MAC frame length, the third MAC frame length is further less than 64 bytes.

For example, if the first MAC frame length is 56 bytes, and the second MAC frame length is 32 bytes, the third MAC frame length is determined to be greater than 56 bytes and 32 bytes. In other words, the third MAC frame length is determined to be greater than 56 bytes and less than 64 bytes. For example, the third MAC frame length may be 57 bytes.

In a third manner, the third MAC frame length is determined to be equal to a value obtained by multiplying a coefficient by a largest length in the first MAC frame length and the second MAC frame length.

Optionally, the third MAC frame length is determined to be equal to a value obtained by multiplying the coefficient by the largest length in the first MAC frame length and the second MAC frame length. In addition, in a case in which the third MAC frame length is the minimum MAC frame length, the third MAC frame length is further less than 64 bytes. The coefficient may be set based on an actual requirement, provided that the third MAC frame length is greater than the second MAC frame length and less than 64 bytes.

For example, if the first MAC frame length is 32 bytes, and the second MAC frame length is 16 bytes, it is determined that the third MAC frame length is 1.5x32=48 bytes.

It may be understood that the foregoing manners of determining the third MAC frame length are merely examples. During actual application, the third MAC frame length may be determined in another form. This is not specifically limited herein.

Step 203. The first device sends the second information to the second device. This step is optional.

Optionally, the first device may send the second information to the second device, so that the second device obtains the MAC frame length supported by the first device. The second information indicates the first MAC frame length supported by the first device. The second device may also determine the third MAC frame length based on the second information and the second MAC frame length.

Step 204. The second device determines the third MAC frame length based on the first MAC frame length and the second MAC frame length. This step is optional.

An operation of the second device in this step is similar to the operation of the first device in step 202, and details are not described herein again.

Step 205. The first device communicates with the second device based on the third MAC frame length.

The following separately describes a sending case and a receiving case.

For the sending case, the first device receives first data sent by a client (client) side. If the first data satisfies a first condition, non-padding encapsulation is performed on the first data to obtain a first data frame, and the first data frame is sent to the second device. If the first data satisfies a second condition, padding encapsulation is performed on the first data to obtain a second data frame, and the second data frame is sent to the second device. In addition, a length of the first data frame and a length of the second data frame are greater than or equal to the third MAC frame length, and the third MAC frame length is less than 64 bytes.

The first condition includes:
1. A length of the first data is greater than or equal to a value obtained by subtracting an encapsulation length of the first data frame from 64 bytes;
2. a length of the first data is less than a value obtained by subtracting an encapsulation length of the first data frame from 64 bytes, the first device supports or has enabled a configurable minimum MAC frame length, the length of the first data is greater than or equal to a value obtained by subtracting the encapsulation length of the first data frame from the third MAC frame length, and the third MAC frame length is the minimum MAC frame length and is less than 64 bytes; or
3. a length of the first data is greater than or equal to a value obtained by subtracting an encapsulation length of the first data frame from the third MAC frame length, and the third MAC frame length is the minimum MAC frame length and is less than 64 bytes.

Optionally, the value obtained by subtracting the encapsulation length of the first data frame from the third MAC frame length may be a value obtained by subtracting a length of a packet header from the third MAC frame length.

For example, the third MAC frame length is 50 bytes. For the standard Ethernet, an Ethernet packet header is 18. In this case, the first condition may be specifically that the length of the first data is greater than or equal to 32 bytes (that is, 50-18). For a case in which a VLAN packet header is 22, the first condition may be specifically that the length of the first data is greater than or equal to 28 bytes (that is, 50-22). Certainly, there may alternatively be a customized packet header in another form. This is not specifically limited herein. The encapsulation length may be a packet header length added during encapsulation. Because the first device needs to add a packet header to the first data to obtain the first data frame, the foregoing 32 bytes or 28 bytes are inferred by the first device before the sending.

The second condition includes:
1. The length of the first data is less than a value obtained by subtracting an encapsulation length of the second data frame from 64 bytes, and the first device does not support or does not enable the minimum MAC frame length; or
2. the length of the second data frame is less than the third MAC frame length, and the third MAC frame length is the minimum MAC frame length and is less than 64 bytes.

The foregoing non-padding encapsulation means that operations such as adding CRC, adding a preamble, and the like are directly performed on the first data to obtain the first data frame. The foregoing padding encapsulation means that the first data is padded (padded) to be greater than or equal to a length of the third MAC frame length, and operations such as adding CRC, adding a preamble, and the like are performed to obtain the second data frame.

For the receiving case, the first device determines a third data frame based on a data packet sent by a PCS. If a length of the third data frame is less than the third MAC frame length, the third data frame is discarded. If the length of the third data frame is greater than 64 bytes, or the length of the third data frame is less than 64 bytes and greater than or equal to the third MAC frame length, the third data frame is received, and operations such as preamble removing, CRC, padding removing (padding removing), and the like are performed on the third data frame.

Optionally, whether to discard a packet may be determined at each layer. A determining manner at another layer is similar to the determining manner at the foregoing MAC layer, and derivation only needs to be performed based on packet headers at different layers. Details are not described herein again.

In addition, the first device may further send third information to a third device. The third information indicates a maximum/minimum MAC frame length (which may be the first MAC frame length or the third MAC frame length) supported by the first device, so that a MAC frame length between the first device and the third device can be determined, and the determined MAC frame length is used for communication.

Certainly, if the third device also communicates with the second device, the third information may indicate the third MAC frame length supported by the first device and the second device, so that a MAC frame length used for communication among the first device, the second device, and the third device can be determined.

In this embodiment of this application, step 203 may be performed after step 202, or may be performed before step 202 or step 201, and step 203 and step 204 may be performed after step 202, or may be performed before step 201. This is not specifically limited herein.

In this embodiment of this application, in one aspect, the first device and the second device may determine, through reconciliation, the MAC frame length used for communication. Compared with the conventional technology in which a default MAC frame length is used, this application in which the MAC frame length is determined through reconciliation is more conducive to improving encapsulation efficiency of a message packet. In another aspect, the first device and the second device support the minimum MAC frame length that is less than 64 bytes of the standard Ethernet. For the message packet, padding (padding) is reduced, network carrying efficiency is improved. Therefore, application performance is improved.

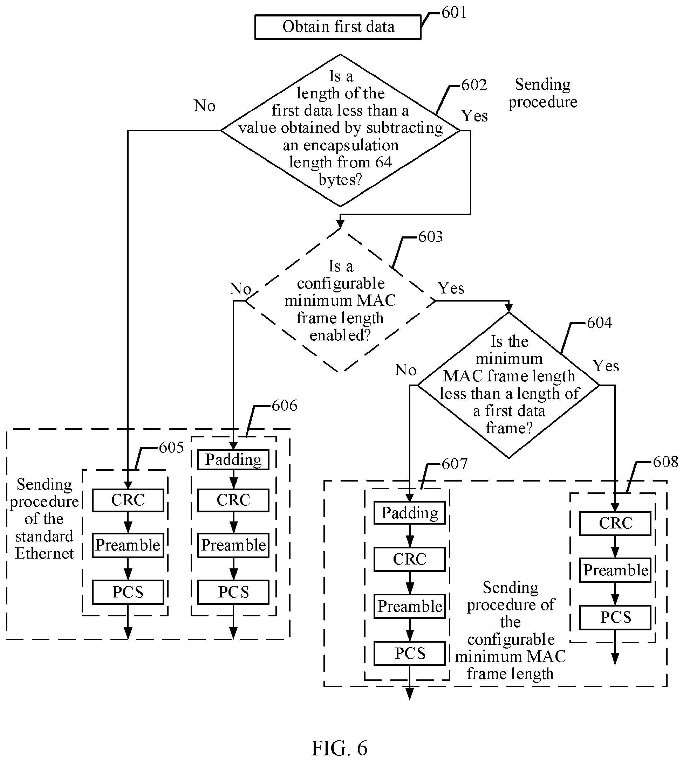

To be compatible with a transceiver procedure of the standard Ethernet, this application further provides another communication method, so that the transceiver procedure of the standard Ethernet and a transceiver procedure based on a minimum MAC frame length less than 64 bytes can be considered. Refer to FIG. 6. An embodiment of a communication method provided in embodiments of this application includes step 601 to step 608. A first device may be the first network device, the second network device, and/or the terminal device in FIG. 1. This is not specifically limited herein.

Step 601. Obtain first data.

The first device receives the first data sent by a client (client) side.

Step 602. Determine whether a length of the first data is less than a value obtained by subtracting an encapsulation length of a first data frame from 64 bytes. If the length of the first data is less than the value obtained by subtracting the encapsulation length of the first data frame from 64 bytes, step 603 is performed. If the length of the first data is not less than the value obtained by subtracting the encapsulation length of the first data frame from 64 bytes, step 605 is performed.

Step 603. Determine whether a configurable minimum MAC frame length is enabled. If the configurable minimum MAC frame length is enabled, step 604 is performed. If the configurable minimum MAC frame length is not enabled, step 606 is performed. This step is optional.

The configurable minimum MAC frame length is a minimum MAC frame length that can be configured to be less than 64 bytes.

Step 604. Determine whether the minimum MAC frame length is less than a length of the first data frame. If the minimum MAC frame length is less than the length of the first data frame, step 608 is performed. If the minimum MAC frame length is not less than the length of the first data frame, step 607 is performed.

The first device determines whether the minimum MAC frame length is less than the length of the first data frame. If the minimum MAC frame length is less than the length of the first data frame, step 608 is performed. If the minimum MAC frame length is not less than the length of the first data frame, step 607 is performed.

Step 605 and step 608 are equivalent to non-padding encapsulation and sending. Step 606 and step 697 are equivalent to padding encapsulation and sending.

Step 602 to step 604 are equivalent to determining whether a first condition and/or a second condition are/is satisfied. If the first condition is satisfied, non-padding encapsulation is performed on the first data to obtain the first data frame, and the first data frame is sent to a second device. If the second condition is satisfied, padding encapsulation is performed on the first data to obtain a second data frame, and the second data frame is sent to the second device.

The first condition includes:
1. a length of the first data is greater than or equal to a value obtained by subtracting the encapsulation length of the first data frame from 64 bytes;
2. a length of the first data is less than a value obtained by subtracting the encapsulation length of the first data frame from 64 bytes, the first device supports or has enabled the configurable minimum MAC frame length, the length of the first data is greater than or equal to a value obtained by subtracting the encapsulation length of the first data frame from the minimum MAC frame length, and the minimum MAC frame length is less than 64 bytes; or
3. a length of the first data is greater than or equal to a value obtained by subtracting the encapsulation length of the first data frame from the minimum MAC frame length, and the minimum MAC frame length is less than 64 bytes.

Optionally, the value obtained by subtracting the encapsulation length of the first data frame from the minimum MAC frame length may be a value obtained by subtracting a length of a packet header from the minimum MAC frame length.

The second condition includes:
1. the length of the first data is less than a value obtained by subtracting an encapsulation length of the second data frame from 64 bytes, and the first device does not support or does not enable the minimum MAC frame length; or
2. a length of the second data frame is less than the minimum MAC frame length, and the minimum MAC frame length is less than 64 bytes.

For other descriptions, refer to the related descriptions about sending in step 205 in the embodiment shown in FIG. 2. Details are not described herein again.

In this embodiment of this application, in a sending procedure, a sending procedure of a standard Ethernet and a sending procedure that supports a configurable minimum MAC frame length may be considered, to implement communication between a standard device and the device provided in this embodiment of this application.

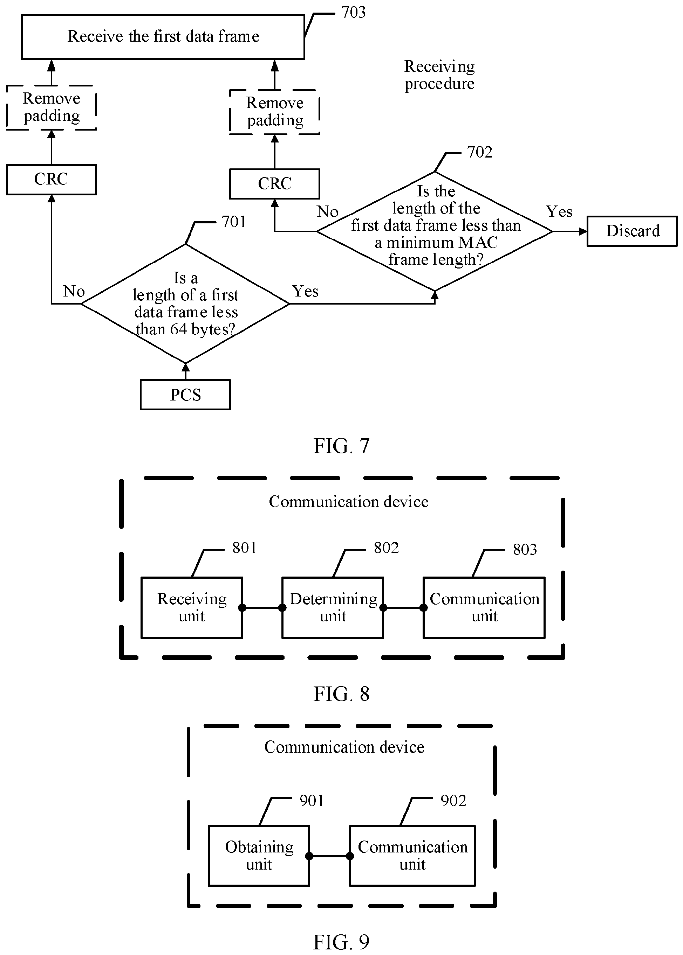

Refer to FIG. 7. An embodiment of a communication method provided in embodiments of this application includes step 701 to step 703. A first device may be the first network device, the second network device, and/or the terminal device in FIG. 1. This is not specifically limited herein.

Step 701. Determine whether a length of a first data frame is less than 64 bytes. If the length of the first data frame is less than 64 bytes, step 702 is performed. If the length of the first data frame is not less than 64 bytes, CRC and step 703 are performed.

The first device first determines the first data frame, and determines whether the length of the first data frame is less than 64 bytes. If the length of the first data frame is less than 64 bytes, step 702 is performed. If the length of the first data frame is not less than 64 bytes, CRC and step 703 are performed. This is equivalent to be compatible with a case in which a standard Ethernet first uses 64 bytes as a determining basis.

Step 702. Determine whether the length of the first data frame is less than a minimum MAC frame length. If the length of the first data frame is less than the minimum MAC frame length, the first data frame is discarded. If the length of the first data frame is not less than the minimum MAC frame length, CRC and step 703 are performed.

The first device determines whether the length of the first data frame is less than the minimum MAC frame length. If the length of the first data frame is less than the minimum MAC frame length, the first data frame is discarded. If the length of the first data frame is not less than the minimum MAC frame length, CRC and step 703 are performed. The minimum MAC frame length is a configurable minimum MAC frame length supported by the first device, and the minimum MAC frame length is less than 64 bytes.

Step 703. Receive the first data frame.

Step 701 and step 703 are equivalent to discarding the first data frame if the length of the first data frame is less than the minimum MAC frame length supported by the first device. If the length of the first data frame is greater than 64 bytes, or the length of the first data frame is less than 64 bytes and greater than or equal to the minimum MAC frame length, the first device receives the first data frame.

For other descriptions, refer to the related descriptions about receiving in step 205 in the embodiment shown in FIG. 2. Details are not described herein again.

In this embodiment of this application, in a receiving procedure, a receiving procedure of the standard Ethernet and a receiving procedure that supports the configurable minimum MAC frame length may be considered, to implement communication between a standard device and the device provided in this embodiment of this application.

FIG. 8 shows an embodiment of a communication device in embodiments of this application. The communication device may be used in a scenario such as switch networking (for example, HPC), an industrial Ethernet, or the like. The communication device may be the first device in FIG. 2, FIG. 6, or FIG. 7. The communication device includes:
a receiving unit 801, configured to receive first information sent by a second device, where the first information indicates a second MAC frame length supported by the second device;
a determining unit 802, configured to determine a third MAC frame length based on a first media access control MAC frame length and the second MAC frame length, where the first MAC frame length is a MAC frame length supported by the first device, and the first MAC frame length is the same as or different from the second MAC frame length; and
a communication unit 803, configured to communicate with the second device based on the third MAC frame length.

In this embodiment, operations performed by the units in the communication device are similar to the operations performed by the first device in the embodiment shown in FIG. 2, FIG. 6, or FIG. 7, and details are not described herein again.

In this embodiment, the receiving unit 801 receives the first information, and the determining unit 802 may determine, through reconciliation, a MAC frame length used for communication. Compared with the conventional technology in which a default MAC frame length is used, this application in which the determining unit 802 may determine the MAC frame length through reconciliation is more conducive to improving encapsulation efficiency of a message packet.

FIG. 9 shows another embodiment of a communication device in embodiments of this application. The communication device may be used in a scenario such as switch networking (for example, HPC), an industrial Ethernet, or the like. The communication device may be the first device in FIG. 2, FIG. 6, or FIG. 7. The communication device includes:
an obtaining unit 901, configured to obtain first data; and
a communication unit 902, configured to: if the first data satisfies a first condition, perform non-padding encapsulation on the first data to obtain a first data frame, and send the first data frame to a second device. The first condition includes: A length of the first data is greater than or equal to a value obtained by subtracting an encapsulation length of the first data frame from a minimum MAC frame length. The minimum MAC frame length is less than 64 bytes.

In this embodiment, operations performed by the units in the communication device are similar to the operations performed by the first device in the embodiment shown in FIG. 2, FIG. 6, or FIG. 7. Details are not described herein again.

In this embodiment, in a sending procedure, it may be determined that a relatively large MAC frame length in devices in reconciliation at two ends is a minimum MAC frame length supported by the devices at the two ends. The communication unit 902 may perform non-padding encapsulation on first data that is greater than or equal to the value obtained by subtracting the encapsulation length of the first data frame from the minimum MAC frame length, to obtain the first data frame, and send the first data frame to the second device. In this way, padding of redundant data is reduced to a maximum extent, and a requirement for transmitting a MAC packet at the two ends is satisfied.

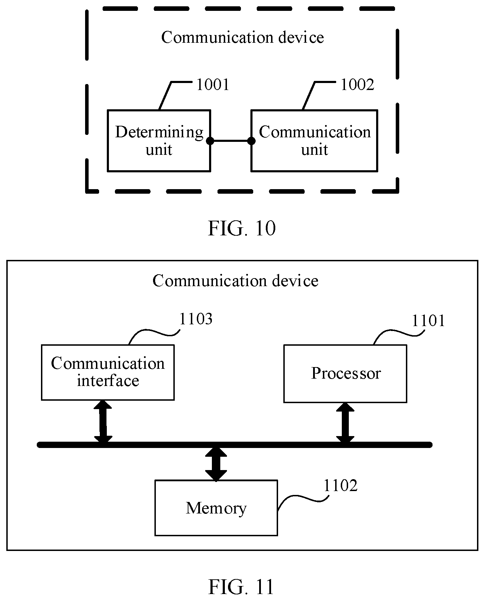

FIG. 10 shows another embodiment of a communication device in embodiments of this application. The communication device may be used in a scenario such as switch networking (for example, HPC), an industrial Ethernet, or the like. The communication device may be the first device in FIG. 2, FIG. 6, or FIG. 7. The communication device includes:
a determining unit 1001, configured to determine a first data frame; and
a communication unit 1002, configured to: if a length of the first data frame is less than a minimum MAC frame length supported by the first device, discard the first data frame. The minimum MAC frame length is less than 64 bytes.

In this embodiment, operations performed by the units in the communication device are similar to the operations performed by the first device in the embodiment shown in FIG. 2, FIG. 6, or FIG. 7, and details are not described herein again.

In this embodiment, in a receiving procedure, the communication unit 1002 may determine, based on a third MAC frame length, whether to perform discarding. This can reduce receiving of a non-MAC frame.

FIG. 11 is a schematic structural diagram of another communication device according to this application. The communication device may be used in a scenario such as an HPC scenario. The communication device may be the first device in FIG. 2, FIG. 6, or FIG. 7. The communication device may include a processor 1101, a memory 1102, and a communication interface 1103. The processor 1101, the memory 1102, and the communication interface 1103 are interconnected through a line. The memory 1102 stores program instructions and data.

The memory 1102 stores program instructions and data that correspond to the steps performed by the first device in the implementations corresponding to FIG. 2, FIG. 6, or FIG. 7.

The processor 1101 is configured to perform the steps performed by the first device shown in any one of the foregoing embodiments in FIG. 2, FIG. 6, or FIG. 7. The communication interface 1103 may be configured to receive and send data, and is configured to perform steps related to obtaining, sending, and receiving in any one of the foregoing embodiments in FIG. 2, FIG. 6, or FIG. 7.

In an implementation, the communication device may include more or fewer components than those in FIG. 11. This is merely an example for description in this application, and is not limited in this application.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. All or some of the integrated units may be implemented by software, hardware, firmware, or any combination thereof.

When the integrated units are implemented by software, all or a part of the integrated units may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

In the specification, claims, and the accompanying drawings of this application, the terms "first", "second", and so on are intended to distinguish between similar objects but do not necessarily indicate a specific order or sequence. It should be understood that the terms used in such a way are interchangeable in proper circumstances, and this is merely a distinguishing manner used when objects with a same attribute are described in embodiments of this application. In addition, the terms "include", "contain" and any other variants mean to cover the non-exclusive inclusion, so that a process, method, system, product, or device that includes a list of units is not necessarily limited to those units, but may include other units not expressly listed or inherent to such a process, method, system, product, or device.

## Claims

1. A communication method, wherein the method comprises:
receiving (201) first information sent by a second device, wherein the first information indicates a second MAC frame length supported by the second device;
determining (202) a third MAC frame length based on a first media access control MAC frame length and the second MAC frame length, wherein the first MAC frame length is a MAC frame length supported by a first device, and the first MAC frame length is the same as or different from the second MAC frame length; and
communicating (205) with the second device based on the third MAC frame length;
and **characterized in that**
the first MAC frame length, the second MAC frame length, and the third MAC frame length each are a maximum MAC frame length, and the maximum MAC frame length is a maximum length for transmitting a MAC frame.

2. The method according to claim 1, wherein the determining (202) a third MAC frame length based on a first MAC frame length and the second MAC frame length comprises:
determining that the third MAC frame length is the first MAC frame length, and the first MAC frame length is greater than or equal to the second MAC frame length.

3. The method according to claim 1, wherein the determining (202) a third MAC frame length based on a first MAC frame length and the second MAC frame length comprises:
determining that the third MAC frame length is greater than or equal to the first MAC frame length and the second MAC frame length, and the third MAC frame length is less than 64 bytes.

4. The method according to any one of claims 1 to 3, wherein the method further comprises:
sending (203) second information to the second device, wherein the second information indicates the first MAC frame length supported by the first device, and the second information is used by the second device to determine the third MAC frame length.

5. The method according to any one of claims 1 to 4, wherein the method further comprises:
obtaining first data; and
the communicating (205) with the second device based on the third MAC frame length comprises:
if the first data satisfies a first condition, performing non-padding encapsulation on the first data to obtain a first data frame, and sending the first data frame to the second device, wherein a length of the first data frame is greater than or equal to the third MAC frame length, the third MAC frame length is less than 64 bytes, and the first condition comprises: a length of the first data is greater than or equal to a value obtained by subtracting an encapsulation length of the first data frame from the third MAC frame length.

6. The method according to claim 5, wherein the communicating with the second device based on the third MAC frame length comprises:
if the first data satisfies a second condition, performing padding encapsulation on the first data to obtain a second data frame, and sending the second data frame to the second device, wherein a length of the second data frame is greater than or equal to the third MAC frame length, the third MAC frame length is less than 64 bytes, and the second condition comprises: the length of the first data is less than a value obtained by subtracting an encapsulation length of the second data frame from the third MAC frame length.

7. The method according to any one of claims 1 to 6, wherein the method further comprises:
receiving a third data frame; and
if a length of the third data frame is less than the third MAC frame length, discarding the third data frame, wherein the third MAC frame length is less than 64 bytes.

8. The method according to claim 7, wherein the method further comprises:
if the length of the third data frame is greater than 64 bytes, or the length of the third data frame is less than 64 bytes and greater than or equal to the third MAC frame length, receiving the third data frame.

9. The method according to any one of claims 1 to 8, wherein the first information is link layer discovery protocol LLDP information and/or physical coding sublayer PCS information.

10. The method according to claim 9, wherein the first information is carried in a type-length-value TLV field in the LLDP information, a preamble, or a code block in the PCS information.

11. The method according to any one of claims 1 to 10, wherein the method further comprises:
sending third information to a third device based on the third MAC frame length, wherein the third information is used by the third device to determine a MAC frame length used for communication with the first device.

12. A first device, wherein the first device comprises:
a receiving unit (801), configured to receive first information sent by a second device, wherein the first information indicates a second MAC frame length supported by the second device;
a determining unit (802, 1001), configured to determine a third MAC frame length based on a first media access control MAC frame length and the second MAC frame length, wherein the first MAC frame length is a MAC frame length supported by the first device, and the first MAC frame length is the same as or different from the second MAC frame length; and
a communication unit (803, 1002), configured to communicate with the second device based on the third MAC frame length;
and **characterized in that**
the first MAC frame length, the second MAC frame length, and the third MAC frame length each are a maximum MAC frame length, and the maximum MAC frame length is a maximum length for transmitting a MAC frame.

13. A computer-readable storage medium, wherein the computer-readable storage medium stores instructions; and when the instructions are executed on a computer, the computer is enabled to perform the method according to any one of claims 1 to 11.

14. A computer program product, wherein when the computer program product is executed on a computer, the computer is enabled to perform the method according to any one of claims 1 to 11.

## Patentansprüche

1. Kommunikationsverfahren, wobei das Verfahren Folgendes umfasst:
Empfangen (201) erster Informationen, die durch eine zweite Vorrichtung gesendet werden, wobei die ersten Informationen eine zweite MAC-Rahmenlänge angeben, die durch die zweite Vorrichtung unterstützt wird;
Bestimmen (202) einer dritten MAC-Rahmenlänge basierend auf einer ersten Rahmenlänge der Medienzugriffssteuerung, MAC-Rahmenlänge, und der zweiten MAC-Rahmenlänge, wobei die erste MAC-Rahmenlänge eine MAC-Rahmenlänge ist, die durch eine erste Vorrichtung unterstützt wird, und die erste MAC-Rahmenlänge dieselbe wie die zweite MAC-Rahmenlänge ist oder sich von dieser unterscheidet; und
Kommunizieren (205) mit der zweiten Vorrichtung basierend auf der dritten MAC-Rahmenlänge;
und **dadurch gekennzeichnet, dass**
die erste MAC-Rahmenlänge, die zweite MAC-Rahmenlänge und die dritte MAC-Rahmenlänge jeweils eine maximale MAC-Rahmenlänge sind, und die maximale MAC-Rahmenlänge eine maximale Länge zum Übertragen eines MAC-Rahmens ist.

2. Verfahren nach Anspruch 1, wobei das Bestimmen (202) einer dritten MAC-Rahmenlänge basierend auf einer ersten MAC-Rahmenlänge und der zweiten MAC-Rahmenlänge Folgendes umfasst: Bestimmen, dass die dritte MAC-Rahmenlänge die erste MAC-Rahmenlänge ist und die erste MAC-Rahmenlänge größer oder gleich der zweiten MAC-Rahmenlänge ist.

3. Verfahren nach Anspruch 1, wobei das Bestimmen (202) einer dritten MAC-Rahmenlänge basierend auf einer ersten MAC-Rahmenlänge und der zweiten MAC-Rahmenlänge Folgendes umfasst:
Bestimmen, dass die dritte MAC-Rahmenlänge größer oder gleich der ersten MAC-Rahmenlänge und der zweiten MAC-Rahmenlänge ist, und die dritte MAC-Rahmenlänge kleiner als 64 Bytes ist.

4. Verfahren nach einem der Ansprüche 1 bis 3, wobei das Verfahren ferner Folgendes umfasst:
Senden (203) zweiter Informationen an die zweite Vorrichtung, wobei die zweiten Informationen die erste MAC-Rahmenlänge angeben, die durch die erste Vorrichtung unterstützt wird, und die zweiten Informationen durch die zweite Vorrichtung verwendet werden, um die dritten MAC-Rahmenlänge zu bestimmen.

5. Verfahren nach einem der Ansprüche 1 bis 4, wobei das Verfahren ferner Folgendes umfasst:
Ermitteln erster Daten; und
das Kommunizieren (205) mit der zweiten Vorrichtung basierend auf der dritten MAC-Rahmenlänge Folgendes umfasst:
sofern die ersten Daten eine erste Bedingung erfüllen, Durchführen einer Nicht-Padding-Kapselung an den ersten Daten, um einen ersten Datenrahmen zu ermitteln, und Senden des ersten Datenrahmens an die zweite Vorrichtung, wobei eine Länge des ersten Datenrahmens größer oder gleich der dritten MAC-Rahmenlänge ist, die dritte MAC-Rahmenlänge kleiner als 64 Bytes ist und die erste Bedingung Folgendes umfasst: eine Länge der ersten Daten ist größer oder gleich einem Wert, der durch Subtrahieren einer Kapselungslänge des ersten Datenrahmens von der dritten MAC-Rahmenlänge ermittelt wird.

6. Verfahren nach Anspruch 5, wobei das Kommunizieren mit der zweiten Vorrichtung basierend auf der dritten MAC-Rahmenlänge Folgendes umfasst:
sofern die ersten Daten eine zweite Bedingung erfüllen, Durchführen einer Padding-Kapselung an den ersten Daten, um einen zweiten Datenrahmen zu ermitteln, und Senden des zweiten Datenrahmens an die zweite Vorrichtung, wobei eine Länge des zweiten Datenrahmens größer oder gleich der dritten MAC-Rahmenlänge ist, die dritte MAC-Rahmenlänge kleiner als 64 Bytes ist und die zweite Bedingung Folgendes umfasst: die Länge der ersten Daten ist kleiner als ein Wert, der durch Subtrahieren einer Kapselungslänge des zweiten Datenrahmens von der dritten MAC-Rahmenlänge ermittelt wird.

7. Verfahren nach einem der Ansprüche 1 bis 6, wobei das Verfahren ferner Folgendes umfasst:
Empfangen eines dritten Datenrahmens; und
sofern eine Länge des dritten Datenrahmens kleiner als die dritte MAC-Rahmenlänge ist, Verwerfen des dritten Datenrahmens, wobei die dritte MAC-Rahmenlänge kleiner als 64 Bytes ist.

8. Verfahren nach Anspruch 7, wobei das Verfahren ferner Folgendes umfasst:
sofern die Länge des dritten Datenrahmens größer als 64 Bytes ist oder die Länge des dritten Datenrahmens kleiner als 64 Bytes und größer oder gleich der dritten MAC-Rahmenlänge ist, Empfangen des dritten Datenrahmens.

9. Verfahren nach einem der Ansprüche 1 bis 8, wobei die ersten Informationen Informationen des Link-Layer-Discovery-Protokolls, LLDP-Informationen, und/oder Informationen der physischen Teilcodierschicht, PCS-Informationen, sind.

10. Verfahren nach Anspruch 9, wobei die ersten Informationen in einem Typ-Länge-Wert-Feld, TLV-Feld, in den LLDP-Informationen, einer Präambel oder einem Codeblock in den PCS-Informationen enthalten sind.

11. Verfahren nach einem der Ansprüche 1 bis 10, wobei das Verfahren ferner Folgendes umfasst:
Senden dritter Informationen an eine dritte Vorrichtung basierend auf der dritten MAC-Rahmenlänge, wobei die dritten Informationen durch die dritte Vorrichtung verwendet werden, um eine MAC-Rahmenlänge zu bestimmen, die zur Kommunikation mit der ersten Vorrichtung verwendet wird.

12. Erste Vorrichtung, wobei die erste Vorrichtung Folgendes umfasst:
eine Empfangseinheit (801), die dazu konfiguriert ist, erste Informationen, die durch eine zweite Vorrichtung gesendet werden, zu empfangen, wobei die ersten Informationen eine zweite MAC-Rahmenlänge angeben, die durch die zweite Vorrichtung unterstützt wird;
eine Bestimmungseinheit (802, 1001), die dazu konfiguriert ist, eine dritte MAC-Rahmenlänge basierend auf einer ersten Rahmenlänge der Medienzugriffssteuerung, MAC-Rahmenlänge, und der zweiten MAC-Rahmenlänge zu bestimmen, wobei die erste MAC-Rahmenlänge eine MAC-Rahmenlänge ist, die durch die erste Vorrichtung unterstützt wird, und die erste MAC-Rahmenlänge dieselbe wie die zweite MAC-Rahmenlänge ist oder sich von dieser unterscheidet; und
eine Kommunikationseinheit (803, 1002), die dazu konfiguriert ist, mit der zweiten Vorrichtung basierend auf der dritten MAC-Rahmenlänge zu kommunizieren;
und **dadurch gekennzeichnet, dass**
die erste MAC-Rahmenlänge, die zweite MAC-Rahmenlänge und die dritte MAC-Rahmenlänge jeweils eine maximale MAC-Rahmenlänge sind, und die maximale MAC-Rahmenlänge eine maximale Länge zum Übertragen eines MAC-Rahmens ist.

13. Computerlesbares Speichermedium, wobei das computerlesbare Speichermedium Anweisungen speichert; und, wenn die Anweisungen auf einem Computer ausgeführt werden, der Computer in die Lage versetzt wird, das Verfahren nach einem der Ansprüche 1 bis 11 durchzuführen.

14. Computerprogrammprodukt, wobei, wenn das Computerprogrammprodukt auf einem Computer ausgeführt wird, der Computer in die Lage versetzt wird, das Verfahren nach einem der Ansprüche 1 bis 11 durchzuführen.

## Revendications

1. Procédé de communication, dans lequel le procédé comprend :
la réception (201) de premières informations envoyées par un deuxième dispositif, dans lequel les premières informations indiquent une deuxième longueur de trame MAC prise en charge par le deuxième dispositif ;
la détermination (202) d'une troisième longueur de trame MAC sur la base d'une première longueur de trame de commande d'accès au support, MAC, et de la deuxième longueur de trame MAC, dans lequel la première longueur de trame MAC est une longueur de trame MAC prise en charge par un premier dispositif, et la première longueur de trame MAC est identique ou différente de la deuxième longueur de trame MAC ; et
la communication (205) avec le deuxième dispositif sur la base de la troisième longueur de trame MAC ;
et **caractérisé en ce que**
la première longueur de trame MAC, la deuxième longueur de trame MAC, et la troisième longueur de trame MAC sont chacune une longueur de trame MAC maximale, et la longueur de trame MAC maximale est une longueur maximale pour la transmission d'une trame MAC.

2. Procédé selon la revendication 1, dans lequel la détermination (202) d'une troisième longueur de trame MAC sur la base d'une première longueur de trame MAC et de la deuxième longueur de trame MAC comprend :
la détermination que la troisième longueur de trame MAC est la première longueur de trame MAC, et la première longueur de trame MAC est supérieure ou égale à la deuxième longueur de trame MAC.

3. Procédé selon la revendication 1, dans lequel la détermination (202) d'une troisième longueur de trame MAC sur la base d'une première longueur de trame MAC et de la deuxième longueur de trame MAC comprend :
la détermination que la troisième longueur de trame MAC est supérieure ou égale à la première longueur de trame MAC et à la deuxième longueur de trame MAC, et la troisième longueur de trame MAC est inférieure à 64 octets.

4. Procédé selon l'une quelconque des revendications 1 à 3, dans lequel le procédé comprend également :
l'envoi (203) de deuxièmes informations au deuxième dispositif, dans lequel les deuxièmes informations indiquent la première longueur de trame MAC prise en charge par le premier dispositif, et les deuxièmes informations sont utilisées par le deuxième dispositif pour déterminer la troisième longueur de trame MAC.

5. Procédé selon l'une quelconque des revendications 1 à 4, dans lequel le procédé comprend également :
l'obtention de premières données ; et
la communication (205) avec le deuxième dispositif sur la base de la troisième longueur de trame MAC comprend :
si les premières données satisfont une première condition, la réalisation d'une encapsulation sans remplissage sur les premières données pour obtenir une première trame de données, et l'envoi de la première trame de données au deuxième dispositif, dans lequel une longueur de la première trame de données est supérieure ou égale à la troisième longueur de trame MAC, la troisième longueur de trame MAC est inférieure à 64 octets, et la première condition comprend : une longueur des premières données est supérieure ou égale à une valeur obtenue en soustrayant une longueur d'encapsulation de la première trame de données de la troisième longueur de trame MAC.

6. Procédé selon la revendication 5, dans lequel la communication avec le deuxième dispositif sur la base de la troisième longueur de trame MAC comprend :
si les premières données satisfont une deuxième condition, la réalisation d'une encapsulation de remplissage sur les premières données pour obtenir une deuxième trame de données, et l'envoi de la deuxième trame de données au deuxième dispositif, dans lequel une longueur de la deuxième trame de données est supérieure ou égale à la troisième longueur de trame MAC, la troisième longueur de trame MAC est inférieure à 64 octets, et la deuxième condition comprend : la longueur des premières données est inférieure à une valeur obtenue en soustrayant une longueur d'encapsulation de la deuxième trame de données de la troisième longueur de trame MAC.

7. Procédé selon l'une quelconque des revendications 1 à 6, dans lequel le procédé comprend également :
la réception d'une troisième trame de données ; et
si une longueur de la troisième trame de données est inférieure à la troisième longueur de trame MAC, la suppression de la troisième trame de données, dans lequel la troisième longueur de trame MAC est inférieure à 64 octets.

8. Procédé selon la revendication 7, dans lequel le procédé comprend également :
si la longueur de la troisième trame de données est supérieure à 64 octets, ou si la longueur de la troisième trame de données est inférieure à 64 octets et supérieure ou égale à la troisième longueur de trame MAC, la réception de la troisième trame de données.

9. Procédé selon l'une quelconque des revendications 1 à 8, dans lequel les premières informations sont des informations de protocole de découverte de couche de liaison, LLDP, et/ou des informations de sous-couche de codage physique, PCS.

10. Procédé selon la revendication 9, dans lequel les premières informations sont transportées dans un champ de type-longueur-valeur, TLV, dans les informations LLDP, un préambule, ou un bloc de code dans les informations PCS.

11. Procédé selon l'une quelconque des revendications 1 à 10, dans lequel le procédé comprend également :
l'envoi de troisièmes informations à un troisième dispositif sur la base de la troisième longueur de trame MAC, dans lequel les troisièmes informations sont utilisées par le troisième dispositif pour déterminer une longueur de trame MAC utilisée pour la communication avec le premier dispositif.

12. Premier dispositif, dans lequel le premier dispositif comprend :
une unité de réception (801), configurée pour recevoir de premières informations envoyées par un deuxième dispositif, dans lequel les premières informations indiquent une deuxième longueur de trame MAC prise en charge par le deuxième dispositif ;
une unité de détermination (802, 1001), configurée pour déterminer une troisième longueur de trame MAC sur la base d'une première longueur de trame de commande d'accès au support, MAC, et de la deuxième longueur de trame MAC, dans lequel la première longueur de trame MAC est une longueur de trame MAC prise en charge par le premier dispositif, et la première longueur de trame MAC est identique ou différente de la deuxième longueur de trame MAC ; et
une unité de communication (803, 1002), configurée pour communiquer avec le deuxième dispositif sur la base de la troisième longueur de trame MAC ;
et **caractérisé en ce que**
la première longueur de trame MAC, la deuxième longueur de trame MAC, et la troisième longueur de trame MAC sont chacune une longueur de trame MAC maximale, et la longueur de trame MAC maximale est une longueur maximale pour la transmission d'une trame MAC.

13. Support de stockage lisible par ordinateur, dans lequel le support de stockage lisible par ordinateur stocke des instructions ; et lorsque les instructions sont exécutées sur un ordinateur, l'ordinateur est activé pour réaliser le procédé selon l'une quelconque des revendications 1 à 11.

14. Produit de programme informatique, dans lequel lorsque le produit de programme informatique est exécuté sur un ordinateur, l'ordinateur est activé pour réaliser le procédé selon l'une quelconque des revendications 1 à 11.
